# EUROPEAN PATENT SPECIFICATION

(11) **EP 2 522 504 B1**
(45) Date of publication and mention of the grant of the patent: **07.08.2019**
(21) Application number: 12275065.6
(22) Date of filing: 10.05.2012
(51) Int. Cl.: B32B 7/12, B32B 27/36, B65D 51/20, B32B 37/12, B32B 37/20, B32B 38/04, B32B 43/00, B32B 38/14, B32B 38/18, B32B 37/15, B32B 38/00, B65D 53/08

(54) **Coloured tabbed container closure liners**
Behälterverschlusseinlagen mit Farbetiketten
Doublures de fermeture de récipient à languette colorée

(30) Priority: 10.05.2011 GB 201107766
(43) Date of publication of application: 14.11.2012
(73) Proprietor: Selig Sealing Products, Inc., Forrest, IL 61741 (US)
(72) Inventor: Sachs, Victor Martin, Sanderstead, Surrey CR2 0OF (GB); Brett, Anthony Maxwell, Aylsbury, Buckinghamshire HP18 9AD (GB); McLean, Andrew Fenwick, Reading, Berkshire RG32 6QZ (GB); Thornhill, Craig Warren, Thatcham, Berkshire RG19 3XR (GB)
(74) Representative: Gill Jennings & Every LLP

(56) References cited:
- EP-A1- 1 935 636
- EP-A1- 2 014 461
- US-A1- 2009 311 454

## Description

The present invention relates to a method of making a laminate which is used in container closure systems. The laminate produced is a primary laminate sheet including a tab stock. The laminate has a coloured top surface. The laminate is slit and punched to produce container closure liners which are sealed to the mouth of containers. The coloured top surface of the container closure liner is visible once the liner has been sealed to the mouth of the container.

It is common place in the packaging of a wide variety of materials ranging from pharmaceutical products to instant coffee that a closure is provided in the form of a seal connected to the mouth of a container. Often the closure is such that the underside of the seal has a heat sensitive adhesive coating or a meltable plastic layer covered by a metal foil. The metal foil can provide the substrate of the seal or may include a separate substrate formed from plastic material or paper. The seal closure is placed against the mouth of the container and sandwiched against it typically by an applied screw cap or snap on cap. An induction heat process heats the metal foil and in turn activates the heat sensitive adhesive layer or melts the plastic layer so that on cooling the seal closes the mouth of the container. Alternatively, the seal may be applied to the container without the means of a cap by direct application and induction sealed in place. A snap on or screw cap can then be fitted or the seal can be accessible if required.

Containers used in the packaging industry are often provided with a screw cap so that once the seal has been opened the container can be temporarily closed again.

The caps of said containers and the containers themselves are often made out of a variety materials and are often a different colour, density or substance to each other. A difficulty encountered after the container has been emptied is that the container and cap have to be separated so that they can be recycled effectively. In many cases, the exclusion of a cap would leave just a seal laminate. In most cases this does not provide enough protection to the contents of the container as it could be easily pierced. It also eliminates the ability of the container to be temporary resealed by the cap.

In certain cases, if the cap is transparent and is formed using the same material and density as the container, then this would not be acceptable in certain industrial circumstances as the cap is often used to display instructions, a logo or be identifiable by the end user. For example, in the milk industry, the colour of the screw cap is used by the consumer to identify the grade of the product in terms of fat content.

Another difficulty often encountered by eventual users is the removal of such container closure liners from the container. Attempts have thus far been made to incorporate a tab extending side ways from the mouth of the container not within the circumference of the container so that the consumer can grip this to facilitate the removal of the container closure liner.

EP1935636 describes a method of producing a primary laminate including a tabstock. The primary laminate comprises a seal laminate, a foil layer and a top foam layer, a tabstock and a plastic film. The method in EP1935636 produces a primary laminate wherein the tabstock strips are visible to the end user. This makes the procedure for slitting the laminate into rolls for punching out container closure liners simple as the operator can align the slitting machinery with the visible tabstock. If the tabstock were to be obscured it would be impossible to determine where to slit the continuous sheet using the method disclosed in EP1935636.

EP2032460 discloses the use of coloured adhesive layer used in the formation of coloured sealing inserts for screw caps of containers. The introduction of ink into the adhesive could render these sealing inserts unsuitable as a container closure with a tabstock. The ink could decrease the strength of the adhesive layer of the primary laminate. This weakens the structural integrity of the container closures so that they are not able to be removed by pulling the tab. Instead the container closure liner would remain on the container mouth.

The method employed in EP2032460 only provides a method for producing a sealing insert with a single, solid colour. This does not allow for a pattern or non-solid colour to be visible to the end user. EP2032460 also highlights the difficulty of incorporating a printed top layer on a sealing insert manufactured using the same methods to produce sealing inserts having a transparent top layer. It is suggested that the production of sealing inserts with a printed top layer is uneconomical due to high printing costs and high wastage.

GB2443185 discloses a transparent cap and visible container closure liners for use in the milk industry. The container closure liner does not have a tab. GB2443185 describes the use of a transparent cap to overcome the problem of container closure failure not being apparent to the consumer at the point of purchase. This is easily identified by the end user through the use of transparent screw caps. There is no disclosure of a method of making such container closure liners.

The object of the present invention is provision of a product comprising
a) a container containing comestible product;
b) a container closure liner to be heat sealed around the mouth of the container;
c) a transparent cap, which is removable from and replaceable onto the container, wherein the liner carries an ink pattern that can be seen through the cap; and the transparent cap is the same material and of similar density to the material used in the container.

The final product uses the ink pattern to obscure the foil and tabstock layers of the container closure liner. Preferably the container and cap are made from the same materials so that they can be recycled together without the need to separate the cap from the container.

A first aspect of the present invention provides a primary laminate continuous sheet comprising
a) a seal laminate comprising a metal foil layer, a heat sealable layer and a support layer, the heat sealable layer being on one side of the foil and the support layer being on the opposite side of the foil; and
b) wherein several strips of longitudinally continuous tabstock including a registration strip of tabstock along an edge are arranged intermittently across a seal laminate according to claim 1, and the seal laminate and strips of tabstock are both laminated to the first surface of a continuous plastic sheet formed of a transparent material, wherein the plastic sheet carries a cured printed pattern on either surface extending towards each edge of the plastic sheet, leaving a band of transparent plastic sheet along one or both edges, by passing a curtain of adhesive between the seal laminate with the strips of tabstock and the plastic sheet,
   characterised in that during lamination the position of the plastic sheet is adjusted laterally relative to the position of the tabstock strips so that the printed pattern is in registration with the strips of tabstock, whereby the printed ink obscures strips of tabstock from visibility through the plastic sheet in the product primary laminate, and whereby the registration strip of tabstock underlies said band so that it is visible through said band in the primary laminate product.

Liners for closing containers are cut from the primary laminate so as to comprise tabs lying wholly within the circumference of the, usually circular, liner.

The foil and heat sealable layer of the seal laminate are conventional for induction sealing systems. The heat sealable is suitable to form an adhesive seal to a food or beverage (i.e. comestible) container.

The support layer of the seal laminate may be a plastic sheet and is selected from the group consisting polyester, preferably polyethylene terephthalate, polyamide, polypropylene or a composite, most preferably the support layer is polyethylene terephthalate.

The support layer of the seal laminate can comprise a foam layer. The foam may comprise several layers e.g. of coextruded materials having surface layers selected for compatibility with adjacent surfaces. The foam is preferably formed of lower alkene polymers and copolymers, preferably of ethylene and/or propylene. Foam formed from blended polymers may be used.

As noted above, an essential feature of the primary laminate is the inclusion of a tabstock so that the container closure liner will have a free tab. In the primary seal laminate produced, while the relative dimensions of the tab are not limited, it may be preferable that, for example the tab lies wholly within the circumference of the neck of the container onto which the liner will be attached and typically the tab occupies about 50% of the seal area, where the primary laminate has a diameter of less than 36 mm. The tabstock strips may be 10-100 mm wide. The tab is provided by adhering the tabstock to the top plastic sheet of the primary laminate. The tabstock is narrower in width than the heat sealable laminate.

Preferably the tabstock is formed of a polyester, more preferably polyethylene terephthalate. In one embodiment of the present invention, the bottom surface of the tabstock which is ultimately in contact with the support layer of the heat sealable laminate may be coated with a release material, for example, silicone. This minimises the possibility, when the finished primary seal laminate is adhered to a container by induction heat sealing, of the tabstock sticking to the top support layer. Such release coatings are not typically necessary.

The adhesive needs to be one that has sufficiently high surface energy to adhere to plastic materials such as PET but which will not damage the metallic rollers used. The adhesive should be of high enough peel strengths that low storage temperatures and at room temperature to avoid de-lamination of the container closure liner during removal from the sealed container using the adhered tab. The adhesive is based on a polymeric material, preferably an extrudable polymer. Materials with melt points (astm D3418) in the range 70-100°C and densities (astm D792) in the range 0.920-0.955 g/cm³, for instance around 0.940-0.945 g/cm³ are suitable. Copolymer of ethylene with C₁₋₁₂ alkyl (alk)acrylate esters (e.g. acrylate or methacrylate esters), especially C₁₋₄ alkyl esters, preferably of acrylic acid, especially butyl acrylate or methyl acrylate, may be used. The copolymers are random copolymers, for instance with molar proportions of acrylates of 0.5-25%, especially in the range 1-20%. Preferably the polymeric material has a melt flow index (astm D1238) of about 2 dg/min (190°C, 2.16 kg). A particularly preferred polymeric adhesive is the ethylene acrylate copolymer which has a melt flow index value of approximately 2 dg/min, a density of 0.94 g/cm³ and a melting point of 91°C.

The top layer of the tab laminate is a continuous plastic sheet formed of transparent material which is made at least in part opaque by the covering ink applied to a surface of said sheet. The covering ink can be printed so as to provide a pattern or a solid colour. In a preferred embodiment the printed plastic sheet is also coated with a lacquer when the pattern is carried on the second surface which is used to protect the ink and the printed pattern and also prevent ink from contacting the comestible product.

It is important for the printed pattern on the top plastic sheet layer to be aligned with the tabstock strips underneath. In one embodiment the top sheet may have a pattern designed to provide relevant information for the consumer, e.g. "pull here" which would need to be aligned and directly on top of the tabstock.

Preferably the plastic sheet is formed of a material selected from the group consisting of polyester, preferably polyethylene terephthalate, polyamide, polypropylene or a composite. Most preferably the plastic sheet is polyethylene terephthalate.

Preferably the thickness of the plastic sheet is at least 20 µm. More preferably the thickness of the plastic sheet is in the range from 20-40 µm. In a preferred embodiment of the present invention, where the plastic sheet is PET preferably it has a surface layer with improved adhesive properties for instance formed by coextrusion.

A fourth object of the present invention is a method of forming container closures each comprising a transparent cap for fitting around the mouth of a container and a heat sealable liner within the cap for heat sealing to the mouth, wherein the liners are cut from a longitudinally extending laminate product sheet and positioned into the cap, the laminate product sheet comprising
a) a seal laminate comprising a metal for a layer, a heat sealable layer and a support layer, the heat sealable layer being on one side of the foil and the support layer being on the opposite side of the foil; and
b) a tab laminate comprising a product plastic sheet formed of transparent material and at least one ribbon of tabstock extending longitudinally partially across the laminate continuous sheet, wherein the tab laminate overlies the seal laminate and the tabstock is adhered to the plastic sheet on the first sheet surface, being the surface facing the seal laminate, wherein the plastic sheet is adhered to the support layer beyond the ribbon of tabstock by an adhesive wherein the break-in value of the adhesive bond is greater than 16 N/12.5 mm at 330 mm/min at 180°, and wherein either surface of the plastic sheet carries a printed pattern of cured ink, that obscures the underlying ribbon of tabstock from visibility through the plastic sheet, and the printed pattern is in registration with said at least one ribbon of tabstock, wherein the liners are cut by a punch from the product sheet through the laminate including the tabstock such that a hinged tab is formed on each liner which lies over a proportion of the perimeter of the liner and is liftable from the edge of the liner to form a hinge across the liner, wherein the punching is aligned with the printed pattern of the cured ink, whereby the tab is visibly identifiable as a tab, and wherein the container closure the cured ink is visible through the transparent cap.

The container to which the container closure liner is attached may be made of glass or plastic material such as polyethylene, polyester, polyvinyl chloride, polypropylene or acrylonitrile-butadiene-styrene polymer.

A transparent screw cap equipped with a container closure liner as described above may be screwed on to the open neck of a container thus sandwiching the container closure liner between the open neck of the container and the top of the cap. In a preferred embodiment, the screw cap is the same material, density and colour as the container. The container closure liner is then adhered via the heat sealable on the lower surface of the laminate to the open neck of the container by induction heating.

A further aspect of the invention provides a method of making the new primary laminate continuous sheet wherein several strips of longitudinally continuous tabstock including a registration strip of tabstock along an edge are arranged intermittently across a seal laminate according to claim 1, and the seal laminate and strips of tabstock are both laminated to the first surface of a continuous plastic sheet formed of a transparent material, wherein the plastic sheet carries a cured printed pattern on either surface extending towards each edge of the plastic sheet, leaving a band of transparent plastic sheet along one or both edges, by passing a curtain of adhesive between the seal laminate with the strips of tabstock and the plastic sheet,
characterised in that during lamination the position of the plastic sheet is adjusted laterally relative to the position of the tabstock strips so that the printed pattern is in registration with the strips of tabstock, whereby the printed ink obscures strips of tabstock from visibility through the plastic sheet in the product primary laminate, and whereby the registration strip of tabstock underlies the said band so that it is visible through said band in the primary laminate product.

As stated previously, the method of manufacturing the primary laminate and container closure liners of the present invention uses the main equipment which produces previous products with minimal adaptation. The primary laminate can be made using a similar laminating station to that used in previous Application EP1935636 which produces a coating of adhesive extruded between the plastic film stock and the top face of the primary substrate. A problem arises in attempting to align the tabstock underlayers on the primary laminate sheet with a printed pattern on top of the plastic sheet.

The apparatus required for the method of manufacture of the primary laminate continuous sheet must have separate unwind stations for the laminate feeds that are arranged to enable simultaneous unwinding. The laminate feeds are fed to a lamination station comprising a nip between two rollers. At this point the feeds are adhered to each other to produce the primary laminate including a tabstock. The adhesive is applied vertically downwards as a curtain into the nip where the feed rollers are in contact. The speed of the feed rollers which form the nip should be faster than the rate of application of adhesive to avoid build up of the molten adhesive in the nip which might result in an uneven coating. The adhesive is applied directly from the die head of an extruder.

Prior to reaching the laminating station, the bottom face of the tabstock strips and the support layer of the seal laminate are brought into contact. There is no adhesion between the two feeds. The two feeds are fed in contact with one another to the laminating station. In order to achieve this, the two feeds must approach the laminating station from the same side relative to the extruder. The
combination of the seal laminate and tabstock in contact with each other is referred to as a primary substrate as they are passed to the laminating station together. As the tabstock strip is necessarily narrower in width than the seal laminate, the top face of the primary substrate presented to the laminating station is formed partly of the top face of the tabstock strip and partly of the top layer of the seal laminate. The width of the plastic sheet is the same as or a little narrower than the width of the heat sealable laminate.

Ink can be printed onto the plastic sheet so that it has been rendered opaque before the manufacture of the continuous primary laminate sheet.
The curtain of adhesive should not extend beyond the edge of the plastic sheet, and the edge portion which forms a thicker bead is collected between the edges of the plastic sheet and the support layer for trimming and removal. When precoated with printed ink, there is a narrow margin of uncoated PET sheet which provides means for registering the edge of the plastic sheet in order to overlay the print pattern correctly in line with the tabstock strips.

Registration of the printed pattern or solid colour coated plastic sheet with the prepositioned tabstock strips means that the manufacturing process provides a method for making closures which obscure or completely hide the tabstock strips.

In the laminating station, the primary substrate is brought into contact with the top plastic sheet which is fed simultaneously to the laminating station but from the opposite side of the curtain of adhesive. At the point where the top face of the primary substrate is in contact with the bottom surface of the top plastic sheet, the polymeric adhesive is continuously extruded between the two surfaces. The result is that the top plastic sheet is adhered over the entire surface area of the top face of the primary substrate. This means that over part of the width, the top plastic sheet will be adhered to the support of the seal laminate and over the remaining width, the top plastic sheet will be adhered to the top face of the tabstock strips. In a preferred embodiment where the primary laminate is cut, the result is that a tab portion is formed which lies wholly within the circumference of the seal.

Preferably the plastic sheet is corona treated on the surface which ends up as the lowermost surface in the product, this treatment taking place upstream of the laminating station. This is done in order to ensure that the bond formed to the polymeric adhesive is sufficiently strong.

In the manufacturing process, the feed of tabstock comprises a plurality of narrow strips of tabstock arranged across the machine at regularly spaced apart intervals. In this way, a continuous sheet of primary laminate including tabstock strip may be formed which can then be slit as required (in line or in subsequent operations) thus improving the efficiency of the system.

The primary laminate is slit into narrower continuous strips (laminate product sheets). The slitting of the primary laminate into narrower strips needs to be done with precision in order to ensure that the cuts are made at the correct positions to produce the tabs of the required size when punched so that they are functional. These narrower strips can then be punched or cut to form a container closure liner ready to be placed in the screw cap of the container. Punching or cutting may be carried out in a procedure and/or location separate to the method of making the primary laminate. Alternatively the slit Primary laminate can be used in direct application where the seal liner is punched/cut and induction sealed directly onto the container in a continuous process without the use of a cap. The ability of being able to correctly position the primary laminate on the equipment for slitting is of great importance in order that the tab within the slit tape is correctly positioned so that when punched the tab within the punched liner is of the correct size and correctly positioned so that the tab is consistent and the tabbed portion is appropriately located to be capable of being grabbed at the point of opening. The difficulty arises as the strips of tabstock are not visible continuously through the ink of the top plastic sheet.

In the method of manufacture involving slitting, the method for aligning the printed top plastic sheet and the underlying tabstock during laminating of the product utilises the narrow band of transparent top plastic sheet is left unprinted within the printed area through which is visible the registration strip. This strip of tabstock is laminated into the primary laminate continuous sheet at a fixed position relative to the tabstock strips.

During the laminating process the position of the printed top plastic sheet can be adjusted so that the band of clear transparent top plastic sheet aligns centrally about the registration tabbing strip. This ensures that the printed pattern aligns correctly with the hidden tabstock strips laminated within the primary laminate.

The ability of being able to correctly position the primary laminate on the equipment for slitting relative to the slitting cutters is of great importance to ensure that the tabstock ribbons within the slit tapes (laminate product sheets) are correctly positioned.

The laminate or product sheets including a tabstock ribbon maybe subsequently wound onto a final roll after slitting.

The bond formed between the support layer of the seal laminate and the plastic film sheet must have an break-in value greater than 16 N/12.5 mm at 330 mm/min at 180° when the tab formed of tabstock and plastic sheet is pulled from the seal laminate at 90° to the longitudinal edge of the tab (which is the machine direction of the manufacturing apparatus) with an angle of separation of from the seal laminate 180°. This is in order to ensure that when using the tab to remove the seal from a container, the tab plastic sheet remains adhered to the primary laminate upon application of a pulling force to the tab.

The peel test is suitably carried out using a Hounsfield Tensile Tester. Each test is carried out on three samples. The samples are cut from a strip 12.5 mm wide taken across a sample of primary laminate or slit strip of sufficient size. The sample should be at least the length of the gap between two strips of tabstock. One end of the sample should be cut through the tabstock close to one longitudinal edge, allowing the tab comprising tabstock and plastic sheet to be separated from the seal laminate. The tabstock is mounted in one jaw of the Tensile Tester, with the seal laminate being fixed into the other jaw. The jaws separate at an angle of 180°. A 50 N load cell is utilised for the test. The apparatus is set so as to allow an extension of at least 25 mm, with a speed of 330 mm per minute.

The results recorded include the "break-in force", the force required to overcome the initial resistance to tab de-lamination. Subsequently the "running force" is measured, that is the force required to continue to separate the tab from the seal laminate. The running force is generally substantially constant. For the present product, the break-in force is the more important, since provided this is higher than the force required to peel the seal from the top of the container to which it is attached, the tab/plastic sheet will remain adhered to the seal as peeling starts, the force needed to continue this peeling being lower as the seal is peeled from the container.

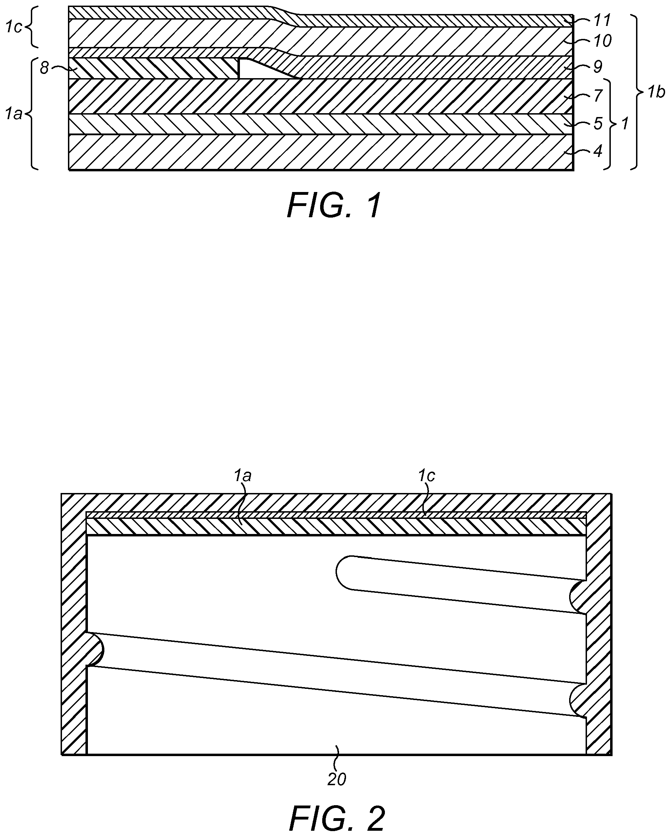

Figure 1 is a cross section through an example of the primary laminate including a tabstock as formed according to the method of the present invention of a vertical dimension greatly exaggerated.
Figure 2 is a cross section through the screw cap container closure in place.

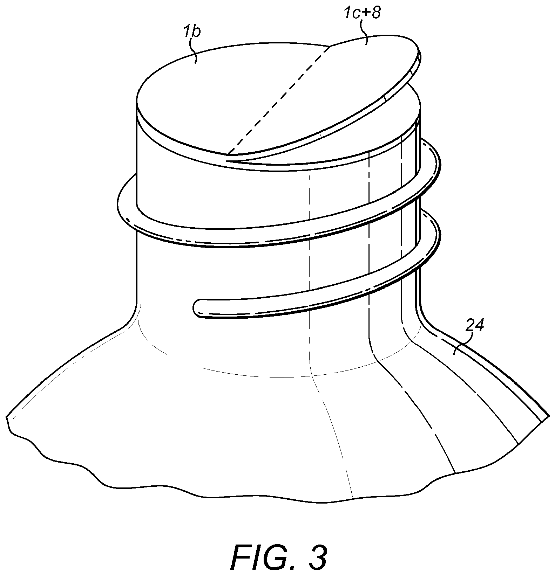

Figure 3 is a perspective view showing the seal closure in place on the neck of the container.
Figure 4 is a schematic diagram of the laminating apparatus used in the method of the present invention.
Figure 5 is a perspective view of part of the apparatus illustrated in Figure 4 with a close up view of the transparent margin and visible registration mark.
Figure 6 is a cross sectional view through a sample of the primary laminate being subjected to the 180°C peel test to check the strength of the extruded adhesive.

### EXAMPLE

A primary laminate (1b) comprising a seal laminate (1) comprising a metal foil layer (5), a heat sealable layer (4), and a support layer (7). The seal laminate (1) is rolled onto the first feed roll (13) in the laminating apparatus.

The second unwind feed rollers (14) in the laminating apparatus is the source of the tabstock, which in this case, is a layer of polyethylene terephthalate (8). The width of the layer of polyethylene terephthalate (8) is typically in the range of 10-100 mm. A third feed roll (15) is loaded with the printed top plastic sheet, in this case a PET sheet (10). The thickness of the PET sheet (10) is in the range from 23-36 µm. The PET sheet (10) used is coextruded PET material with a surface layer which ensures optimal adhesion to the adjacent support layer of the seal laminate. The PET sheet (10) also carries a printed pattern layer (11) which can be on either side of the PET sheet. The ink pattern renders the PET sheet opaque apart from an unprinted transparent band. The ink layer on the second surface can be further coated with a lacquer if necessary.

The seal laminate (1), the tabstock (8) and PET stock (10) are simultaneously fed to the laminating station (6), the seal laminate (1) and the tabstock (8) are brought into contact to form a primary substrate (1a).

Ethylene methyl acrylate copolymer (9) with a melt flow index of 2 dg/min (190°C, 2.16 kg (astm D1238)) is then extruded continuously as a curtain from the extruder (17) between the top face of the primary laminate (1a) and the bottom face of the PET sheet (10). The height of the die head above the nip was about 20 cm. The extrusion conditions, i.e. the weight of adhesive being extruded, its speed and extruder temperature, were such that a temperature of greater than about 200°C, for instance as much as about 250°C is obtained at the nip for adhesion. Roller (18) is a chilled stainless steel roller, while (19) has a Teflon coated surface with Shore A hardness of 70. The rollers (18) and (19) are moving at a speed of 60 to 100 m/min relative to the speed of application of the adhesive, the pressure between them selected to avoid the curtain creasing at the nip.

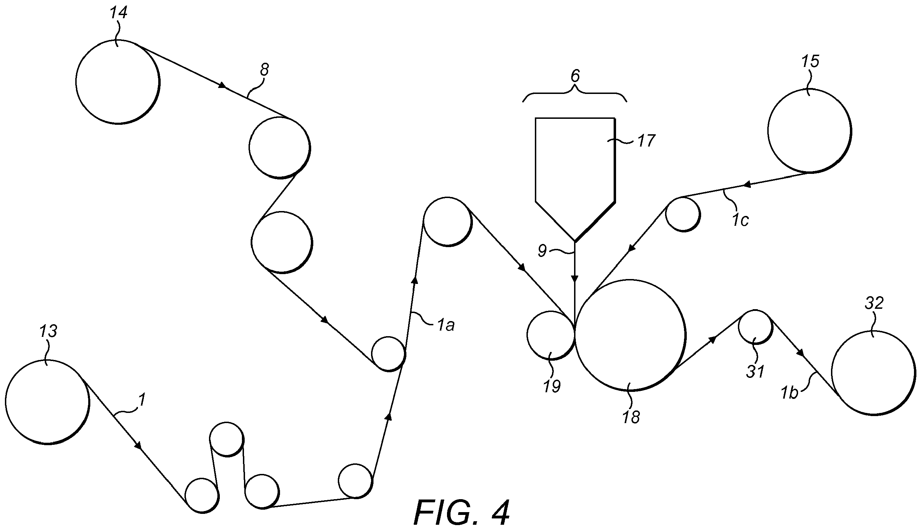

The bottom face of the plastic sheet (10) and the resulting primary laminate (1b) including the tabstock (8) is passed with the top face of the plastic sheet (10) in contact with the chilled roller (18) at a temperature of about 23°C to be rolled onto a final product roll (32). This process is illustrated schematically in Figure 4.

A registration tabbing strip (12a) is positioned on the primary substrate (1a) so that it can be seen through the transparent band (12b) of the top plastic sheet (1c) confirming that tabstock alignment is correct. This registration tabbing strip is relative to the position of the tabstock (8) of the primary substrate and the printed pattern (11) of the top plastic sheet. This system allows for accurate lamination of the tabstock (8) within the continuous primary laminate relative to the printed patterns of the top plastic sheet and subsequent slitting of the continuous primary laminate into rolls of primary laminate with aligned tabstock and printed patterns.

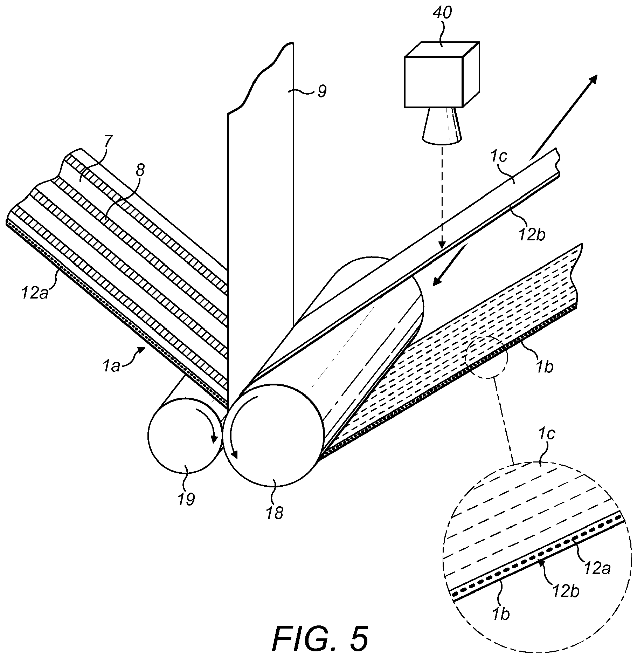

In another embodiment, an optional sensor (40) can be used to detect the edge of the printed pattern on the top plastic sheet and can control the lateral position of the top plastic sheet relative to the tabstock on the primary substrate. This can be seen schematically in Figure 5.

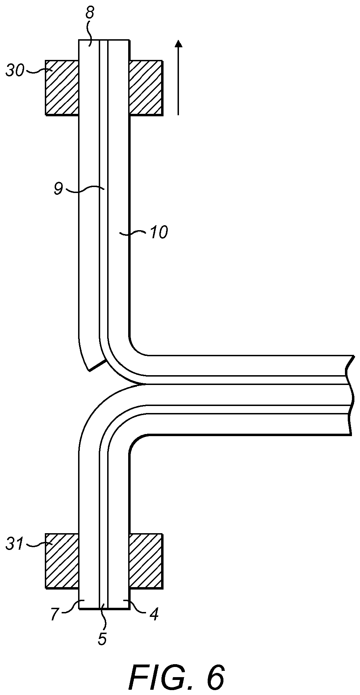

The break-in peel strength was measured as explained above and illustrated in Figure 6. The seal laminate comprising a support layer (7), foil (5) and heat sealable layer (4) were positioned into the lower jaw (31) of the tensile tester. The plastic sheet (10), the tabstock (8) and extruded ethylene methacrylate polymer (9) were mounted in the top jaw (30). The jaws were then moved apart in the direction of the arrow, with the force required to separate the materials at an angle of 180° being recorded. The break-in value was greater than 16 N/cm at 330 mm/min. The Figure is a schematic with the thickness heavily exaggerated.

The primary laminate continuous sheet (1b) was then slit into narrow strips. During slitting, the edge of the printed top plastic sheet on the seal laminate was monitored by an optical sensor, and via a drive system that laterally moved the seal laminate unwind unit, so that the printed pattern and the tabstock within the seal laminate were correctly aligned to the slitting cutters the web was slit. This ensured that the printed pattern and tabstock were corrected positioned on the slit tapes. From these slit tapes of seal laminate, seal liners were punched. The seal laminate liners were inserted inside transparent screw cap (20) which is made from the same material, is the same density and the same colour as the container. The screw cap (20) equipped with the container closure liners is then screwed onto the open neck of the bottle (24). The screw cap (20) and bottle (24) are then subjected to an induction heating process in which the foil is heated around its periphery by the induction process, which, in turn, melts the heat sealable layer (4) to bond the container closure liners to the open neck of the bottle.

## Claims

1. A primary laminate continuous sheet comprising
a) a seal laminate comprising a metal foil layer, a heat sealable layer and a support layer, the hot melt adhesive layer being on one side of the foil and the support layer being on the opposite side of the foil; and
b) a tab laminate comprising a continuous plastic sheet formed of transparent material and having first and second surfaces and several strips of longitudinal continuous tabstock arranged intermittently across the primary laminate continuous sheet, wherein the tab laminate overlies the seal laminate and the tabstock is adhered to the plastic sheet on the first sheet surface, being the surface facing the seal laminate, and wherein the plastic sheet is adhered to the support layer between the tabstock strips via an adhesive, whereby the break-in value of the adhesive bond is greater than 16 N/12.5 mm at 330 mm/min at 180°,
**characterised in that** either surface of the plastic sheet carries a printed pattern of cured ink that obscures strips of tabstock from visibility through the plastic sheet, the printed pattern is in registration with the strips of tabstock, the cured ink pattern extends towards each edge of the plastic sheet leaving a band of transparent plastic sheet along one or both longitudinal edges, wherein a visible registration strip of tabstock extends under the said band, and wherein the visible registration strip provides a registration mark extending in a longitudinal direction visible through the band of plastic sheet relative to the position of the obscured strips of tabstock in the primary laminate.

2. A continuous sheet according to claim 1, wherein the said adhesive is provided as a continuous layer across the said first sheet surface of the plastic sheet, whereby it adheres the plastic sheet to the tabstock strips and the support layer of the laminate.

3. A continuous sheet according to claim 2, wherein the said adhesive is an extruded adhesive, preferably selected from polyethylene, polyethylene vinyl acetate, maleic anhydride/acrylate ester/polyethylene copolymer, ethylene methylacrylate copolymer and acid functional copolymer.

4. A continuous sheet according to any previous claim, wherein only the second surface of the plastic sheet carries a printed pattern of cured ink,

5. A continuous sheet according to claim 4, wherein the second surface of the plastic sheet is further coated over the ink with a lacquer that prevents ink migration.

6. A continuous sheet according to claim 1 to 3, wherein only the first surface of the plastic sheet carries a printed pattern of cured ink.

7. A continuous sheet according to any previous claim, in which the plastic sheet comprises polyester, preferably PET.

8. A continuous sheet according to any previous claim, in which the support layer comprises a foam layer.

9. A method of making a primary laminate continuous sheet according to claim 1, wherein several strips of longitudinally continuous tabstock including a registration strip of tabstock along an edge are arranged intermittently across a seal laminate according to claim 1, and the seal laminate and strips of tabstock are both laminated to the first surface of a continuous plastic sheet formed of a transparent material, wherein the plastic sheet carries a cured printed pattern on either surface extending towards each edge of the plastic sheet, leaving a band of transparent plastic sheet along one or both edges, by passing a curtain of adhesive between the seal laminate with the strips of tabstock and the plastic sheet,
**characterised in that** during lamination the position of the plastic sheet is adjusted laterally relative to the position of the tabstock strips so that the printed pattern is in registration with the strips of tabstock, whereby the printed ink obscures strips of tabstock from visibility through the plastic sheet in the product primary laminate, and whereby the registration strip of tabstock underlies the said band so that it is visible through said band in the primary laminate product.

10. A method according to claim 9, wherein an optical sensor is positioned close to the point of lamination of the primary laminate to detect the printed pattern of the plastic sheet and adjusts the lateral position of the top plastic sheet via a drive system.

11. A slitting method in which a primary laminate continuous sheet according to claim 1 or made according to the method of claims 9 to 10, is longitudinally slit to form two or more longitudinally extending product sheets by means of one or more cutters aligned in relation to the strips of tabstock, wherein the cutters are aligned by means of an optical sensor which senses a single longitudinal slitting registration mark consisting of the registration strip of tabstock visible through said band of the plastic sheet of the primary laminate continuous sheet whereby each product sheet carries one or more tabstock strips.

## Patentansprüche

1. Primäre fortlaufende Laminatbahn, Folgendes umfassend
a) ein Verschlusslaminat, das eine Metallfolienschicht umfasst, eine Heißsiegelschicht und eine Trägerschicht, wobei die Heißschmelzklebstoffschicht auf einer Seite der Folie und die Trägerschicht auf der gegenüberliegenden Seite der Folie ist; und
b) ein Laschenlaminat, das eine fortlaufende Kunststoffbahn, die aus transparentem Material ausgebildet ist, umfasst und eine erste und eine zweite Oberfläche und mehrere Streifen eines fortlaufenden Längslaschenmaterials aufweist, die in Abständen über die primäre fortlaufende Laminatbahn angeordnet sind, wobei das Laschenlaminat über dem Verschlusslaminat liegt und das Laschenmaterial an der Kunststoffbahn auf der ersten Bahnoberfläche klebt, welche die dem Verschlusslaminat zugewandte Oberfläche ist, und wobei die Kunststoffbahn über einen Klebstoff an der Trägerschicht zwischen den Laschenmaterialstreifen klebt, wodurch der Einarbeitungswert der Klebeverbindung größer als 16 N/12,5 mm bei 330 mm/min bei 180° ist, **dadurch gekennzeichnet, dass** jede Oberfläche der Kunststoffbahn ein gedrucktes Muster aus gehärteter Tinte trägt, das Streifen aus Laschenmaterial vor Sichtbarkeit durch die Kunststoffbahn verdeckt, das gedruckte Muster in Passung mit den Streifen des Laschenmaterials ist, das gehärtete Tintenmuster sich in Richtung jeder Kante der Kunststoffbahn erstreckt und eine Leiste einer transparenten Kunststoffbahn entlang einer oder beider Längskanten hinterlässt, wobei ein sichtbarer Passungsstreifen des Laschenmaterials sich unter der Leiste erstreckt, und wobei der sichtbare Passungsstreifen eine Passungsmarkierung bereitstellt, die sich in Längsrichtung sichtbar durch die Leiste der Kunststoffbahn relativ zu der Position des verdeckten Streifens des Laschenmaterials in dem primären Laminat erstreckt.

2. Fortlaufende Bahn nach Anspruch 1, wobei der Klebstoff als eine fortlaufende Schicht über die erste Bahnoberfläche der Kunststoffbahn bereitgestellt ist, wodurch er die Kunststoffbahn an die Laschenmaterialstreifen und die Trägerschicht des Laminats klebt.

3. Fortlaufende Bahn nach Anspruch 2, wobei der Klebstoff ein extrudierter Klebstoff ist, bevorzugt ausgewählt aus Polyethylen, Polyethylenvinylacetat, einem Maleinsäureanhydrid- /Acrylatester-/Polyethylen-Copolymer, einem Ethylenmethylacrylat-Copolymer und einem säurefunktionellen Copolymer.

4. Fortlaufende Bahn nach einem der vorhergehenden Ansprüche, wobei nur die zweite Oberfläche der Kunststoffbahn ein gedrucktes Muster aus gehärteter Tinte trägt,

5. Fortlaufende Bahn nach Anspruch 4, wobei die zweite Oberfläche der Kunststoffbahn ferner mit einem Lack über der Tinte beschichtet ist, der ein Tintenausbluten verhindert.

6. Fortlaufende Bahn nach Anspruch 1 bis 3, wobei nur die erste Oberfläche der Kunststoffbahn ein gedrucktes Muster aus gehärteter Tinte trägt.

7. Fortlaufende Bahn nach einem der vorhergehenden Ansprüche, wobei die Kunststoffbahn Polyester, bevorzugt PET, umfasst.

8. Fortlaufende Bahn nach einem der vorhergehenden Ansprüche, wobei die Trägerschicht eine Schaumschicht umfasst.

9. Verfahren zum Herstellen einer primären fortlaufenden Laminatbahn nach Anspruch 1, wobei mehrere Streifen des in Längsrichtung fortlaufenden Laschenmaterials, einschließlich eines Passungsstreifens des Laschenmaterials entlang der Kante, in Abständen über das Verschlusslaminat nach Anspruch 1 angeordnet sind, und das Verschlusslaminat und die Streifen des Laschenmaterials beide an die erste Oberfläche einer fortlaufenden Kunststoffbahn, die aus transparentem Material ausgebildet ist, laminiert sind, wobei die Kunststoffbahn ein gehärtetes gedrucktes Muster auf beiden Oberflächen trägt, das sich in Richtung jeder Kante der Kunststoffbahn erstreckt, wobei eine Leiste einer transparenten Kunststoffbahn entlang einer oder beider Kanten verbleibt, indem ein Klebstoffvorhang zwischen dem Verschlusslaminat mit den Streifen des Laschenmaterials und dem Kunststoffbahn hindurchgeführt wird, **dadurch gekennzeichnet, dass** während des Laminierens die Position der Kunststoffbahn seitlich relativ zu der Position der Laschenmaterialstreifen derart eingestellt wird, dass das gedruckte Muster in Passung ist mit den Streifen des Laschenmaterials, wodurch die gedruckte Tinte Streifen des Laschenmaterials vor der Sichtbarkeit durch die Kunststoffbahn in das primäre Produktlaminat verdeckt ist, und wobei der Passungsstreifen des Laschenmaterials derart unter der Leiste liegt, dass er durch die Leiste des primären Laminatprodukts sichtbar ist.

10. Verfahren nach Anspruch 9, wobei ein optischer Sensor nahe dem Laminierungspunkt des primären Laminats positioniert ist, um das gedruckte Muster der Kunststoffbahn zu erkennen und die seitliche Position der obersten Kunststoffbahn über ein Antriebssystems einzustellen.

11. Schlitzverfahren, wobei eine primäre fortlaufende Laminatbahn nach Anspruch 1 oder hergestellt nach dem Verfahren der Ansprüche 9 bis 10 in Längsrichtung aufgeschlitzt wird, um zwei oder mehr sich in Längsrichtung erstreckende Produktbögen mittels eines oder mehrerer Schneidewerkzeuge, die in Bezug auf die Streifen des Laschenmaterials angeordnet sind, auszubilden, wobei die Schneidewerkzeuge mittels eines optischen Sensors angeordnet sind, der eine einzelne Längsschlitzpassungsmarkierung erfasst, die aus dem Passungsstreifen des Laschenmaterials, der durch die Leiste der Kunststoffbahn der primären kontinuierlichen Laminatbahn sichtbar ist, besteht, wodurch jede Produktbahn einen oder mehrere Laschenmaterialstreifen trägt.

## Revendications

1. Une feuille continue de stratifié primaire comprenant
a) un stratifié de scellage comprenant une couche de feuille métallique, une couche thermoscellable et une couche de support, la couche adhésive thermofusible se trouvant sur un côté de la feuille et la couche de support se trouvant sur le côté opposé de la feuille ; et
b) un stratifié à languettes comprenant une feuille plastique continue formée d'un matériau transparent et ayant des première et seconde surfaces et plusieurs languettes continues longitudinales agencées de manière intermittente sur la feuille continue de stratifié primaire, dans lequel le stratifié à languettes recouvre le stratifié de scellage et la bande de languettes adhère à la feuille plastique sur la surface de la première feuille, qui est la surface faisant face au stratifié de scellage, et dans lequel la feuille plastique adhère à la couche de support entre les bandelettes de bande de languettes grâce à un adhésif, la valeur de rodage du lien adhésif étant supérieure à 16 N/12,5 mm à 330 mm/min à 180°, **caractérisé en ce que** l'une ou l'autre surface de la feuille plastique présente un motif imprimé d'encre durcie qui occulte la visibilité des bandelettes de bande de languettes à travers la feuille plastique, le motif imprimé est aligné avec les bandelettes de bande de languettes, le motif imprimé d'encre durcie s'étend vers chaque bord de la feuille plastique en laissant un ruban de feuille plastique transparente le long d'un ou des bords longitudinaux, dans lequel une bande de languette d'alignement visible s'étend sous ladite bande, et dans lequel la bande d'alignement visible constitue une marque d'alignement s'étendant dans une direction longitudinale visible à travers le ruban de feuille plastique par rapport à la position des bandes de stratifié primaire.

2. Feuille continue selon la revendication 1, dans laquelle ledit adhésif est fourni en tant que couche continue sur ladite première surface de feuille de la feuille plastique, moyennant quoi il fait adhérer la feuille plastique aux bandelettes de bande de languettes et à la couche de support du stratifié.

3. Feuille continue selon la revendication 2, dans laquelle ledit adhésif est un adhésif extrudé, choisi de préférence parmi le polyéthylène, l'acétate de polyéthylène vinylique, le copolymère anhydride maléique / ester acrylate / polyéthylène, un copolymère d'éthylène méthylacrylate et un copolymère à fonction acide.

4. Feuille continue selon l'une quelconque des revendications précédentes, dans laquelle seule la seconde surface de feuille plastique porte un motif imprimé d'encre durcie.

5. Feuille continue selon la revendication 4, dans laquelle la seconde surface de feuille plastique est en outre revêtue d'une laque sur l'encre qui empêche la migration de l'encre.

6. Feuille continue selon les revendications 1 à 3, dans laquelle seule la première surface de feuille plastique porte un motif imprimé d'encre durcie.

7. Feuille continue selon l'une quelconque des revendications précédentes, dans laquelle la feuille plastique comprend du polyester, de préférence du PET.

8. Feuille continue selon l'une quelconque des revendications précédentes, dans laquelle la couche de support comprend une couche de mousse.

9. Procédé de fabrication d'une feuille continue de stratifié primaire selon la revendication 1, dans lequel plusieurs bandelettes de bande de languettes longitudinale continue comprenant une bandelette d'alignement de bande de languettes le long d'un bord sont agencées de manière intermittente à travers un stratifié étanche selon la revendication 1, et le stratifié de scellage et les bandelettes de bande de languettes sont tous deux stratifiés sur la première surface de la feuille plastique continue formée d'un matériau transparent, dans lequel la feuille plastique présente un motif imprimé durci sur l'une ou l'autre surface s'étendant vers chaque bord de la feuille plastique, laissant un ruban de feuille plastique transparente sur l'un ou les deux bords, en faisant passer un rideau d'adhésif entre le stratifié de scellage avec les bandelettes de bande de languettes et la feuille plastique, **caractérisé en ce que** pendant la stratification, la position de la feuille plastique est ajustée latéralement par rapport à la position des bandelettes de bande de languettes afin que le motif imprimé soit aligné avec les bandelettes de bande de languettes, moyennant quoi l'encre imprimée occulte de la visibilité les bandelettes de bande de languettes à travers la feuille plastique dans le stratifié primaire du produit, et moyennant quoi la bandelette d'alignement de la bande de languettes est sous-jacente à ladite bande de sorte qu'elle soit visible à travers ladite bande dans le produit stratifié primaire.

10. Procédé selon la revendication 9, dans lequel un capteur optique est positionné à proximité du point de stratification du stratifié primaire pour détecter le motif imprimé de la feuille plastique et ajuste la position latérale de la feuille plastique supérieure par l'intermédiaire d'un système d'entraînement.

11. Procédé de refendage dans lequel une feuille continue de stratifié primaire selon la revendication 1 ou fabriquée selon le procédé des revendications 9 à 10, est fendue longitudinalement pour former deux ou plusieurs feuilles de produit s'étendant longitudinalement au moyen d'un ou de plusieurs couteaux alignés en relation avec les bandelettes de bande de languettes, dans lequel les couteaux sont alignés au moyen d'un capteur optique qui détecte une seule marque d'alignement à refente longitudinale constituée par la bandelette d'alignement de bande de languette visible à travers ledit ruban de feuille plastique de la feuille continue de stratifié primaire, chaque feuille portant une ou plusieurs bandelettes de bande de languettes.
